# EUROPEAN PATENT SPECIFICATION

(11) **EP 4 258 703 B1**
(45) Date of publication and mention of the grant of the patent: **29.04.2026**
(21) Application number: 23163403.1
(22) Date of filing: 22.03.2023
(51) Int. Cl.: H04W 4/021, H04W 4/44

(54) **METHODS AND SYSTEMS FOR VEHICLE COMMUNICATION**
VERFAHREN UND SYSTEME ZUR FAHRZEUGKOMMUNIKATION
PROCÉDÉS ET SYSTÈMES DE COMMUNICATION DE VÉHICULE

(30) Priority: 05.04.2022 IN 202241020417
(43) Date of publication of application: 11.10.2023
(73) Proprietor: Harman International Industries, Inc., Stamford, Connecticut 06901 (US)
(72) Inventor: BOLISETTY YESWANTH NAGA, Prasanna Kumar, 560066 Bangalore (IN); KODAKANDLA, Ramana Reddy Reddy, 502334 Medak (IN)
(74) Representative: Kraus & Lederer PartGmbB

(56) References cited:
- CN-A- 108 430 049
- KO BYUNGJIN ET AL: "RSU-Assisted Adaptive Scheduling for Vehicle-to-Vehicle Data Sharing in Bidirectional Road Scenarios", IEEE TRANSACTIONS ON INTELLIGENT TRANSPORTATION SYSTEMS, IEEE, PISCATAWAY, NJ, USA, vol. 22, no. 2, 1 February 2021 (2021-02-01), pages 977 - 989, XP011835172, ISSN: 1524-9050, [retrieved on 20210202], DOI: 10.1109/TITS.2019.2961705

## Description

### BACKGROUND

### TECHNICAL FIELD

Embodiments of the subject matter disclosed herein relate to vehicle communications, and more specifically, to vehicle communication in the absence of a Road-Side Unit (RSU).

### DISCUSSION OF ART

Vehicle-to-everything (V2X) systems are cooperative systems in which vehicles exchange information with other vehicles, e.g., via Vehicle-to-Vehicle (V2V) communication, and with roadside infrastructure, e.g., via Vehicle-to-Infrastructure (V2I) communication, in order to achieve higher levels of safety, comfort, and roadway efficiencies. While V2V communication may be used to enhance driver safety, V2I communication may play an important role in the dissemination of information about a driving environment to vehicles. Road-Side Units (RSUs) mounted at intersections and along roadways may broadcast various information (such as roadwork information, map information, and/or traffic-light information) to vehicles using V2I messaging. Such information may be used by in-vehicle V2I applications in order to improve driving, powertrain, and/or environmental efficiencies. Such information may also be used for safe operation of autonomous vehicles.

RSUs may be installed by the roadside, as part of the infrastructure of a city or a Road Operator (RO), and may have backhaul connectivity to a Traffic Management Center (TMC) (e.g., over an RO's wired network and/or fiber network). The RSUs and various vehicles may be equipped with radio technologies, such as Dedicated Short Range Communication (DSRC) and/or Cellular V2X (CV2X) radio technologies, that may allow them to directly communicate with vehicles, such as via sidelink connections. Sidelink connections may have limited range, which may implicitly impact the nature of possible localization in the system. RSUs may broadcast V2I messages over sidelink connections, which may be received by various vehicles in the coverage area of the RSU, and may be processed by each of the vehicles in implementing various V2I use cases. RSUs may also communicate to TMCs over wired connections (e.g., backhaul connections).

An RSU may have various hardware components and software layers. The hardware components of an RSU may include, for example, a general purpose host Central Processing Unit (CPU), a persistent storage device, one or more modems for radio communication, and a Hardware Security Module (HSM). The operating system, various software services, and various applications may run on the host CPU. Security credentials and/or configuration information may be saved on the persistent storage device. Message signing may be performed on the HSM. The HSM may be a component compliant with Federal Information Processing Standard (FIPS) Publication 140-2 140-2 Level 3, and may store private signing keys. The private keys may be protected and might be prevented from leaving the HSM.

The software layers may include, for example, a standards layer, a services layer (e.g., for RSU services), a base applications layer (e.g., for basic applications), an interface layer, and/or an advanced applications layer. The standards layer may encompass software components that are responsible for handling encoding and/or decoding of V2X standards compliant messages and for implementing V2X networking standards and related protocols for transporting messages (e.g., over DSRC radios and/or CV2X radios). In addition, this layer may implement V2X security components which comply formats for security credentials such as certificates, and may implement protocols and/or algorithms for secure signing and verification of V2X messages.

The services layer may implement services, such as services in compliance with the United States Department of Transportation (USDOT) RSU Specification version 4.1, that may enable an RSU to transmit messages to and/or receive messages from an external entity. These services may use rely either on a backhaul connection, or on components in the standards layer, to send, receive, sign, and verify messages.

The base applications layer may include basic applications for transmitting standard V2I messages from the RSU, such as those defined by the Society of Automotive Engineers (SAE) and/or SAE International. These may include Signal Phase and Timing (SPaT) messages, map messages (MAP), and Traveler Information Message (TIM) messages, among others.

The interface layer and advanced applications layer may include components that enable the RSU to interface with and/or be managed by external entities. A Simple Network Management Protocol (SNMP) agent may enable remote management of configuration over SNMP, while a Traffic Controller Interface module may enable connectivity with various controllers at intersections for receiving SPaT messages and transmitting signal priority and/or pre-emption commands to control traffic lights.

CN 108430049 discloses a roadside unit-based vehicle-named data network data distribution algorithm.. KO BYUNGJIN ET AL: "RSU-Assisted Adaptive Scheduling for Vehicle-to-Vehicle Data Sharing in Bidirectional Road Scenarios", IEEE TRANSACTIONS ON INTELLIGENT TRANSPORTATION SYSTEMS, IEEE, PISCATAWAY, NJ, USA, vol. 22, no. 2, 1 February 2021 (2021-02-01), pages 977-989, investigates the synergy between centralized and decentralized (i.e., ad hoc) data scheduling in vehicular ad hoc networks (VANETs) for offloading and balancing the workloads of road- side units (RSU) in bidirectional road scenarios.

### BRIEF DESCRIPTION

In one embodiment, the current disclosure provides support for a system for a vehicle including a controller comprising instructions stored in memory thereof that when executed enable the controller to gather data related to a vehicle event at a location and store the data in memory in response to the location being free of a road-side unit (RSU). The controller is further configured to establish a vehicle-to-infrastructure network in wireless communication with the vehicle at a second location different from the location.
a system including a vehicle-to-infrastructure network in wireless communication with a vehicle and a road-side unit (RSU). The system further includes a processor of the vehicle comprising instructions stored in memory thereof that when executed enable the processor to gather data related to a vehicle event at a location and store the data in memory in response to the location being free of the RSU.

The disclosure further provides support for a system for a vehicle communication network, the system including a plurality of road side units (RSUs) each located at a location of a plurality of locations. The system further includes a plurality of vehicles traveling along a travel path along which the plurality of locations is located. Each vehicle of the plurality of vehicles comprises a controller with instructions stored on memory thereof that when executed enable the controller to store a vehicle event in memory that occurred at a location of the plurality of locations in response to the location being free of an RSU.

The disclosure further provides support for a system for a vehicle communication network between a plurality of vehicles and an infrastructure, the system including a plurality of road side units (RSUs) each located at a location of a plurality of locations. The plurality of vehicles travel along a travel path along which the plurality of locations is located. Each vehicle of the plurality of vehicles comprises a controller with instructions stored on memory thereof that when executed enable the controller to store a vehicle event in memory that occurred at a location of the plurality of locations in response to the location being free of an RSU and remove the vehicle event from memory in response to a different vehicle not being within a threshold vicinity of a vehicle in which the vehicle event is stored within a threshold duration

### BRIEF DESCRIPTION OF THE DRAWINGS

The disclosure may be better understood from reading the following description of non-limiting embodiments, with reference to the attached drawings, wherein below:
FIG. 1 shows an example of a vehicle communication system;
FIG. 2 shows a method for communicating a vehicle event to a vehicle without a RSU;
FIGS. 3A and 3B show a method for generating updated messages and deleting older messages in response to conditions changing at a location of interest; and
FIG. 4 shows a real-world example of vehicles communicating events at a location of interest in the absence of an RSU.

### DETAILED DESCRIPTION

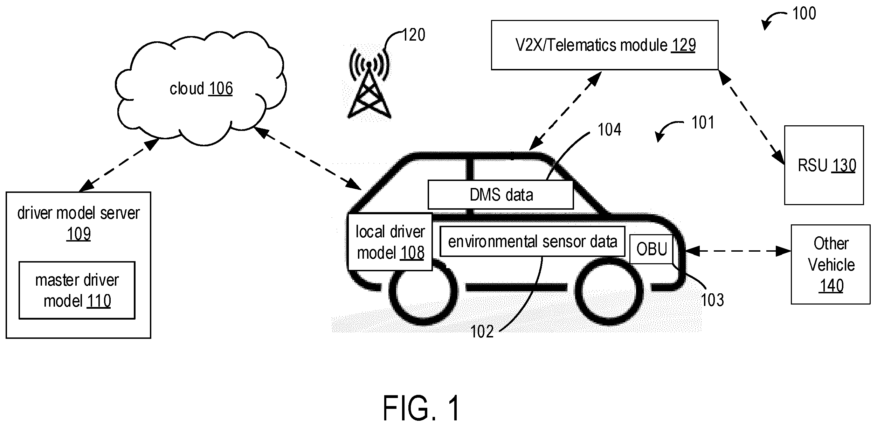

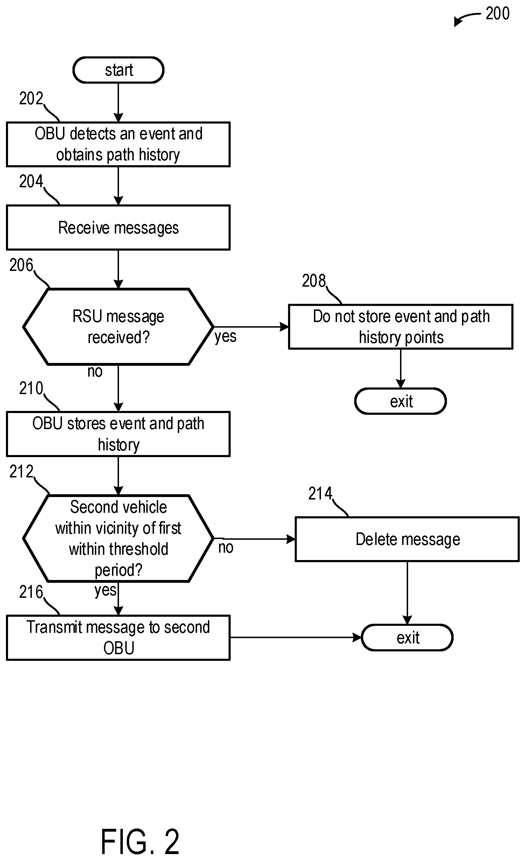

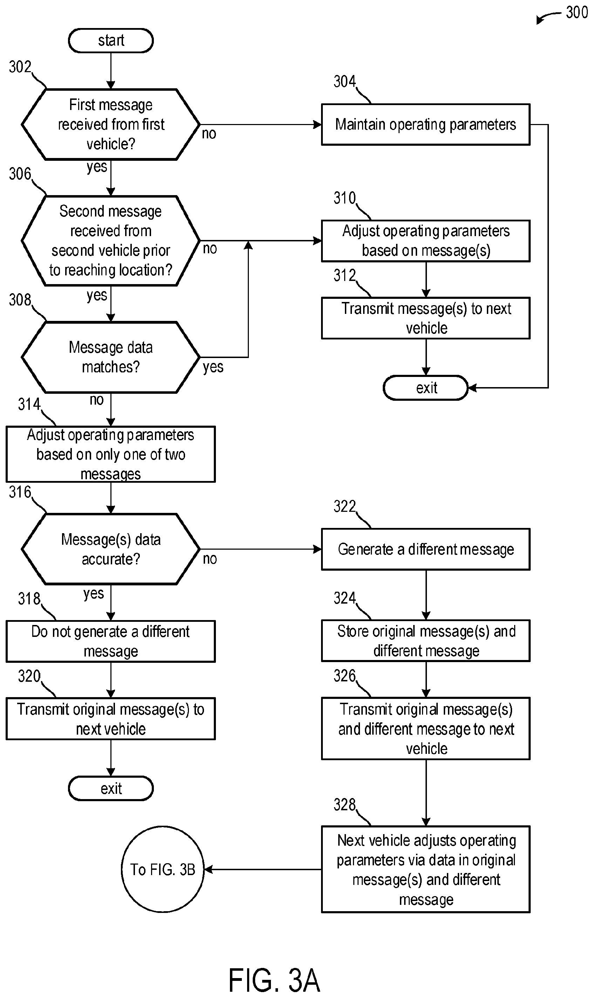

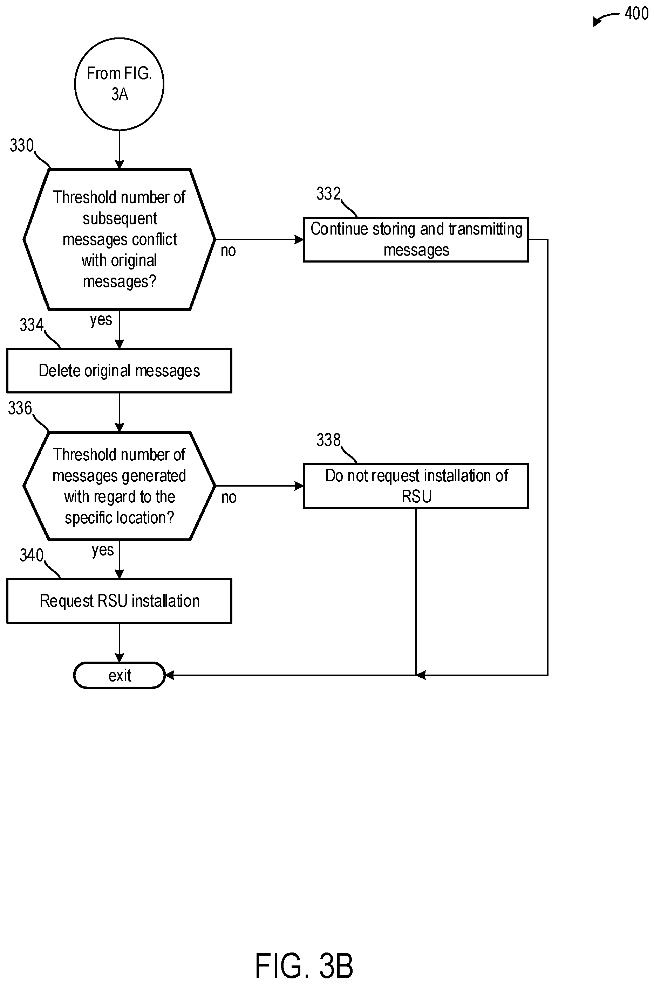

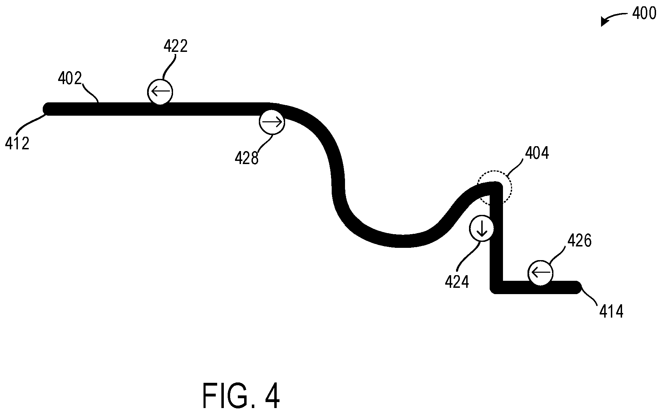

Disclosed herein are systems and methods for communicating directly between vehicles in the absence of a RSU. FIG. 1 illustrates an example of a communication network between vehicles and an infrastructure. FIG. 2 illustrates a method for storing a location of interest at which a vehicle event occurred. A controller or other OBU of a vehicle may generate a message including the location of interest and the vehicle event and transmit the message to another vehicle via dedicated communication hardware in the absence of a RSU. FIGS. 3A and 3B illustrate a method for modifying messages transmitted from a first vehicle to a second vehicle regarding the location of interest in response to a change in the vehicle event at the location of interest. FIG. 4 shows a real-world example of a travel path along which a plurality of vehicles is travelling and communicating with one another in the absence of an RSU.

As used herein, the terms "substantially the same as" or "substantially similar to" are construed to mean the same as with a tolerance for variation that a person of ordinary skill in the art would recognize as being reasonable. As used herein, an element or step recited in the singular and proceeded with the word "a" or "an" should be understood as not excluding plural of said elements or steps, unless such exclusion is stated. As used herein, terms such as "first," "second," "third," and so on are used merely as labels, and are not intended to impose any numerical requirements, any particular positional order, or any sort of implied significance on their objects. As used herein, terminology in which "an embodiment," "some embodiments," or "various embodiments" are referenced signify that the associated features, structures, or characteristics being described are in at least some embodiments, but are not necessarily in all embodiments. Moreover, the various appearances of such terminology do not necessarily all refer to the same embodiments. As used herein, terminology in which elements are presented in a list using "and/or" language means any combination of the listed elements. For example, "A, B, and/or C" may mean any of the following: A alone; B alone; C alone; A and B; A and C; B and C; or A, B, and C.

Referring now to FIG. 1, a communication network 100 is shown, including a vehicle 101 in communication with a driver model server 109 via a cloud 106. In various embodiments, vehicle 101 may access cloud 106 and driver model server 109 via a wireless network, such as a wireless cellular network 120, using a modem of the vehicle (not shown in FIG. 1) coupled to or integrated into an onboard unit (OBU) 103. The modem may wirelessly transmit and receive data in accordance with any of a variety of wireless communication protocols, such as various 3rd Generation Partnership Project (3GPP) specification releases.

The OBU 103 may include a controller, a processor, or other computing device. The OBU 103 receives signals from the various sensors and employs the various actuators to adjust engine operation based on the received signals and instructions stored on a memory of the controller. For example, the OBU 103 may adjust engine operating parameters based on data received from other components of the communication network 100, such as a different vehicle 140, the cloud 106, and/or a road-side unit (RSU) 130.

Vehicle 101 may include a local driver model 108. Local driver model 108 may receive, as inputs, environmental sensor data 102 and driver monitoring system (DMS) data 104 of vehicle 101.

In various embodiments, local driver model 108 may be based on one or more master driver models 110 hosted on driver model server 109. Specifically, a master driver model 110 may be initially created based on DMS data 104 and environmental sensor data 102, which may be received by driver model server 109 from vehicle 101 over wireless cellular network 120. Software running on driver model server 109 may integrate and process DMS data 104 and environmental sensor data 102 to generate master driver model 110. After the master driver model 110 has been created, a copy of master driver model 110 may be transmitted to vehicle 101 via wireless cellular network 120 become local driver model 108. In this way, a greater processing power and greater number of computing resources of driver model server 109 with respect to vehicle 101 may be taken advantage of to analyze patterns in DMS data 104 and environmental sensor data 102, and local driver model 108 may be used locally to adjust one or more actuators of the vehicle based on driver behavior and in-cabin environmental context. By including local driver model 108 in vehicle 101, the adjusting of the one or more actuators may be performed more rapidly, without a latency of transmitting data over wireless cellular network 120.

Vehicle 101 may also me in wireless communication with a V2X/Telematics module 129. V2X/Telematics module 129 may transmit sensor data to vehicle 101 relating to environmental conditions (e.g., weather, traffic, road conditions, and the like) via wireless cellular network 120.

Each vehicle may be communicatively coupled to other vehicles or infrastructures using appropriate communications technology, as is known in the art. The vehicle messaging system may broadcast (and receive) information regarding vehicle data, vehicle diagnostics, traffic conditions, vehicle location information, vehicle operating procedures, etc., via vehicle-to-vehicle (V2V), vehicle-to-infrastructure-to-vehicle (V2I2V), vehicle-to-infrastructure (V2I), and/or vehicle-to-everything (V2X) technology. The communication and the information exchanged between vehicles can be either directly between vehicles, or can be multi-hop. In some examples, longer range communications (e.g. WiMax) may be used in place of, or in conjunction with, V2V, or V2I2V, to extend the coverage area by a few miles. In still other examples, vehicle may be communicatively coupled to other vehicles or infrastructures via the wireless network and the internet (e.g. cloud), as is commonly known in the art. One example of a V2V communication device may include dedicated-short-range-communication (DSRC) network which may allow vehicles within a threshold proximity (e.g., 5,000 feet) to communicate (e.g., transfer information) free of an internet connection

In some examples, the wireless network includes V2X functionality that may work in tandem with remote vehicles (RVs) and infrastructure components, such as RSUs 130 via the V2X/telematics module 129. The RVs and the RSUs may exchange defined messages, creating a connected vehicle communication infrastructure to enhance road safety, efficiency etc. The wireless network may utilize radio technology, such as DSRC or cellular based V2X (e.g., CV2X). As the messages are broadcasted, vehicles in communication with the network may receive one or more of the transmitted messages.

Vehicles may communicate directly with one another over one or more of a cellular network, the wireless network 120, a dedicated short-range communication (DSRC) network, Bluetooth, or other similar communication method.

The methods and systems disclosed herein provide support for an embodiment of a system including a V2I network in wireless communication with a vehicle and a road-side unit (RSU). The vehicle and the RSU may each be one of a plurality of vehicles and a plurality of RSUs respectively. Each vehicle may include an OBU or other computing device configured to gather data related to a vehicle event at a location and store the data in memory in response to the location being free of the RSU. The vehicle may be a first vehicle and transmit the data to a second vehicle within a threshold proximity of the first vehicle. The first vehicle and the second vehicle may share one or more similarities including make, model, driver behavior, payload, fuel level, tire pressure, and the like. The threshold proximity may be based on a range of V2V communication hardware of the first vehicle and the second vehicle. The data may provide suggested operating parameter adjustments for the second vehicle to execute in anticipation of the vehicle event at the location. The OBU of the second vehicle may signal to actuators to perform the desired adjustments. Desired adjustments may include adjusting one or more of an engine speed, a vehicle speed, an engine fueling, and traction control.

If the second vehicle or a different vehicle are not within a threshold proximity of the first vehicle within a threshold period, then the OBU may delete the data in response to the threshold period elapsing prior to the second vehicle being within the threshold proximity to the first vehicle.

Turning now to FIG. 2, it shows a method 200 illustrating for storing and transmitting messages comprising data related to an event. Instructions for carrying out method 200 and the rest of the methods included herein may be executed by a controller, such as OBU 103 of FIG. 1, based on instructions stored on a memory of the controller and in conjunction with signals received from sensors of the engine system, such as the sensors described above with reference to FIG. 1. The controller may employ engine actuators of the engine system to adjust engine operation, according to the methods described below.

The method 200 begins at 202, which includes an onboard unit (OBU) detecting an event and obtaining a path history, such as OBU 103 of FIG. 1. The path history may include a specific location, such as coordinates or an address, corresponding to where the event was sensed. The event may be a plurality of road conditions that deviate from expected driving conditions. The plurality of road conditions may include one or more of a vehicle collision, object(s) on a travel path, traction loss, potholes, grade, turn degree, traffic conditions, and the like.

At 204, the method 200 may include updating one or more messages received from a network. Receiving the one or more messages may include receiving messages held in a queue of a V2X network from an RSU.

At 206, the method 200 may include determining if messages are received from the RSU. As one example, messages may not be received from the RSU if the RSU is not within a threshold proximity of the vehicle or located within a threshold distance of the location of the event. An RSU may not be located within the threshold distance of the location for various reasons, including the location being at a relatively high elevation, the location being rural, the travel path being relatively new, and the like. As another example, the message from the RSU may not be received if a wireless connection therebetween is poor and unable to transmit the message. As described above, RSUs may be difficult or undesired to install in certain locations due to high altitudes, weather conditions, government ordinances, low traffic, high costs, and the like. Additionally or alternatively, if a connection between an RSU and the vehicle is not established, then the location may be determined to be free of an RSU. The connection may not be established due to weather, degradation of the RSU, or the like.

If a message was received from the RSU, then the event and path history points are not stored in memory of the vehicle. Thus, the message from the RSU may be used to store the event data.

If the RSU message is not received due to an RSU not being within the threshold distance of the location of the event, then at 210, the method 200 may include storing the event and path history in memory of the OBU. The event and path history may be stored as a packet of information, transmissible to other vehicles, RSUs, a cloud, and the like.

At 212, the method 200 may include determining if a second vehicle is within a vicinity of the vehicle within a threshold period. The vehicle may be a first vehicle comprising the stored event and location data. The first vehicle may store the event and path history for the threshold period in a memory of its OBU, where the threshold period may be based on a determined distance and/or time elapsed. The determined distance and/or time elapsed may be fixed values. Additionally or alternatively, the determined distance and/or time elapsed may be dynamic values, adjusted based on a type of event at the path history, memory availability, and the like. For example, if the type of event corresponds to an accident, traction loss, objects on a road way, or other priority events, then the threshold period may be increased. If the type of event corresponds to a traffic delay, a traffic light outage, or other minor event, then the threshold period may be reduced. If the second vehicle is not within the vicinity of the first vehicle within the threshold period, then at 214, the method 200 may include deleting the message. If the second vehicle is within the vicinity of the first vehicle within the threshold period, then at 216, the method 200 may include transmitting the message to the second OBU. The message may be transmitted via various V2V or V2I routines as described above.

In some examples, additionally or alternatively, the first OBU may store the message until the message is transmitted. The message may be transmitted to the second OBU, an RSU, or other device. Additionally or alternatively, the second OBU may be travelling on a same path or toward the location from which the first OBU left. In some examples, if the second OBU is not travelling toward the location, then the first OBU may ignore the second OBU and continue searching for an RSU or other vehicle.

In this way, a system for a vehicle communication network includes RSUs, each RSU located at a location of a plurality of locations and a plurality of vehicles traveling along a travel path along which the plurality of locations is located. Each vehicle of the plurality of vehicles comprises an OBU, such as a controller or a processor, with instructions stored on memory thereof that when executed enable the OBU to store a vehicle event in memory that occurred at a location of the plurality of locations in response to the location being free of an RSU. The OBU may remove the vehicle event from memory in response to a different vehicle not being within a threshold vicinity of the vehicle in which the vehicle event is stored within a threshold duration. The threshold duration is a dynamic value adjusted based on a prioritization of the vehicle event. For example, if the vehicle event is slippery conditions, then the prioritization may be higher, and the threshold duration increased, relative to a travel delay due to traffic congestion.

If the different vehicle is within the threshold vicinity of the vehicle within the threshold duration, then the OBU may transmit the vehicle event directly to a different vehicle via V2V. In one example, the vehicle event stored by the vehicle is a vehicle event transmitted to the vehicle by a prior vehicle, the prior vehicle traveling through the location prior to the vehicle. Upon receiving the vehicle event, the OBU may adjust the vehicle event received from the prior vehicle in response to the vehicle event not matching conditions encountered at the location when the vehicle travels through the location. The vehicle may transmit the updated vehicle event and the prior vehicle event to a different vehicle traveling toward the location, as will be described herein.

Turning now to FIG. 3A, it shows a method 300 for generating messages and amending operating parameters based on conditions at the location. At 302, the method 300 may include determining if a first message is received by the vehicle from a first other vehicle. The first message may be transmitted from the first other vehicle to the vehicle if the vehicle and the first other vehicle are within a threshold proximity of each other. The threshold proximity may be based on a determined distance along a travel path. The determined distance may be less than 1 kilometer. In one example, the determined distance is less than 0.25 kilometers. Additionally or alternatively, the determined distance may be based on hardware of the vehicles capable of communicating with one another. The message may include event data along with a location corresponding to the event, such as coordinates and/or an address. The message may include other data such as suggested operating parameters, traffic info, traction, weather, obstructions, and the like.

At 304, the method 300 may include not adjusting the operating parameters if the vehicle did not receive the first message from the first vehicle. As such, the vehicle may operate under the assumption that an event has not occurred at an upcoming location along a travel path. In this way, the vehicle operating parameters may be maintained.

At 306, the method 300 may include determining if a second message is received from a second other vehicle prior to reaching the location, the second other vehicle different than the first other vehicle and the vehicle. The second other vehicle may be traveling in a direction identical to a direction of travel of the first other vehicle. In one example, each of the first other vehicle and the second other vehicle are traveling in a direction opposite to a direction of travel of the vehicle. In this way, the location may be an upcoming location for the vehicle while the location is a previous location for the first other vehicle and the second other vehicle. The second message may include event data and location data based on a path history.

If the second message was received, then at 308, the method 300 may include determining if the first message and the second message match (e.g., where the first message is the same as the second message). The OBU of the vehicle may compare the contents of the messages to determine if there are any differences therebetween, such as a change in conditions, location, delays, traction, and the like.

If the second message was not received or if the first and second messages match, then at 310, the method 300 may include adjusting operating parameters based on the message(s). In one example, if method 300 proceeds to 310 following no at 306, then operating parameters may be adjusted based on only the first message. Adjusting operating parameters may include but are not limited to adjusting one or more of engine speed, vehicle speed, throttle position, selected gear, traction control, power distribution to each wheel, and the like. As another example, if method 300 proceeds to 310 following yes at 308, then adjusting the operating parameters may be based on both messages or only one of the first message and the second message. However, since the messages match, the OBU may select either of the first message or the second message to adjust operating parameters.

Additionally or alternatively, the operating parameters may be adjusted based on the message(s) in combination with anticipated conditions based on data in the message(s) along with GPS data indicating topography, sun exposure, weather, and the like. For example, if the message(s) indicates that the road is icy at the location, then the road may be icy on a first side of the road along which the first other vehicle traveled. The road may not be icy on a second side of the road. The vehicle may estimate an upcoming condition of a second side of the road based on a time of day, nearby landscape, slope, and other conditions. By doing this, an estimate of an iciness of the second side of the road may be combined with data in the message(s) to prophylactically adjust operating parameters upon arriving at the location.

At 312, the method 300 may include transmitting the message(s) to the next vehicle. That is to say, the vehicle may continue to store the message(s) received from the different vehicles after the driving through the location and transmit the message(s) to another vehicle. By doing this, driving conditions of vehicles may be improved at the location absent of an RSU.

Returning to 308, if the message data does not match then at 314, the method 300 may include adjusting operating parameters based on only one of the two messages (e.g., the first message and the second message). In one example, the operating parameters may be adjusted based on the more recent of the messages received. For example, the second message may be used as it may include more updated information regarding the location than the first message. As another example, the operating parameters may be adjusted based on the more conservative of the two messages. For example, if one of the two messages suggests driving at a slower speed through the location than the other, then the operating parameters may be adjusted based on the message suggesting driving at the slower speed. In some examples, additionally or alternatively, the operating parameters may be adjusted based on a combination of the parameters provided by the first message and the second message. In one example, an average of the suggested adjustments may be calculated and used to adjust the vehicle operating parameters at the location.

At 316, the method 300 may include determining if the data of the message(s) is accurate. The suggested parameters from the message(s) may be compared to vehicle desired parameters at the location. For example, if the suggested parameters suggest a higher vehicle speed relative to a desired vehicle speed upon reaching and experiencing the event at the location, then it may be determined that the message data is inaccurate. As another example, if the message data includes a delay or blockage at the location, and a duration of the delay or the presence of the delay is different for the vehicle, then the message data may be inaccurate.

If the message data is accurate and the suggested parameters and conditions match desired parameters and conditions sensed by the vehicle, then at 318, the method 300 may include not generating a different message. At 320, the method 300 may include transmitting the original message(s) to a next vehicle. The original message(s) include the first message transmitted from the first vehicle and/or the second message transmitted from the second vehicle.

Returning to 316, if the message data is inaccurate, then at 322, the method 300 may include generating a different message. The different message may include event data and operating parameter suggestions based on the conditions experienced by the vehicle.

At 324, the method 300 may include storing the original message(s) and the different message.

At 326, the method 300 may include transmitting the original message(s) and the different message to a next vehicle.

At 328, the method 300 may include the next vehicle adjusting one or more operating parameters based on data in the original message(s) and the different message.

At 330, the method 300 may include determining if a threshold number of subsequent messages conflict with original messages. The threshold number may be a predetermined number signifying a desired confidence that events at the location have changed since the generation of the original messages. In one example, the threshold number is greater than two. Additionally or alternatively, the threshold number may be based on consecutive messages. For example, if three subsequent messages are received and the first and third messages conflict with the original messages, but the second subsequent message matches the original messages, then the threshold number may not be met.

If the threshold number of subsequent messages do not conflict with the original messages, then at 332, the method 300 may include continuing storing and transmitting one or more messages. The one or more messages may include a previous message and a current message. Additionally or alternatively, if a plurality of messages are identical, then only one message may be transmitted and the others deleted. By doing this, memory space and network bandwidth may be preserved.

If the subsequent messages conflict with the original messages, then at 334, the method 300 may include deleting the original messages. Data in the original messages may no longer be accurate and may no longer represent a condition of the event(s) at the location. As such, only the subsequent, more up-to-date messages may be transmitted.

At 336, the method 300 may determine if a threshold number of messages are generated at a single location. The threshold number at the single location may indicate the single location as being a candidate for installation of an RSU. The threshold number of messages may be a predetermined number based on a plurality of conditions including RSU installation cost, the time of day, and a cause of the event. For example, if the cause of the event is weather related, then the threshold number of messages may be higher. As another example, if the RSU installation cost is higher, then the threshold number of messages may be higher. As a real-world example, if the cause of the event is due to snow in a mountain pass, where RSU installation costs are relatively high, then the threshold number of messages may be relatively high to initiate a request for an RSU installation. If vehicle collisions occur frequently at the location, then the threshold number of messages may be lower.

If a threshold number of messages are not generated for the specific location, then at 338, the method 300 may include not requesting installation of an RSU. If the threshold number of messages are generated for the specific location, then at 340, the method 300 may include requesting RSU installation. Requesting RSU installation may include transmitting the request to a central server. The central server may queue installation of the RSU in response to the one request or in response to a predetermined number of requests.

In another representation, a method includes gathering data related to a vehicle event and storing data in memory of a vehicle in response to a location of the vehicle event being free of a RSU. The vehicle may be configured to establish a connection with a vehicle-to-infrastructure network, including where the vehicle is in communication with a RSU at a second location different than the location. The method may further include transmitting the vehicle event to a different vehicle within a threshold period. The method may further include transmitting the vehicle event from the different vehicle to another different vehicle. The method may further include removing the vehicle event from memory of the vehicle in response to the different vehicle not establishing a connection with the vehicle with the threshold period. The method may further include comparing the vehicle event received from the vehicle to a vehicle event sensed at the location. The method may further include updating the vehicle event in response to the sensed vehicle event differentiating from the received vehicle event.

Turning now to FIG. 4, it shows a real-world example 400 of a two-way travel path 402. Along the travel path 402, there is a location, indicated by dashed circle 404, at which an event has occurred. Herein, dashed circle 404 is simply referred to as location 404. The event may include one or more of a plurality of conditions that may result in a relatively fast change in desired operating parameters. The event may include a vehicle collision, a road obstruction, a road surface change, a steep gradient, a reduced turn radius, reduced visibility, reduced traction, and the like.

A plurality of vehicles is travelling along the travel path 402. Two vehicles are travelling in a first direction and two vehicles are travelling in a second direction, opposite to the first direction. Additionally, vehicles travelling in the first direction may travel along a first side of the travel path 402 and vehicles travelling in the second direction may travel along a second side of the travel path 402. The first and second sides of the travel path 402 may be separated via a barrier or painted lines.

The plurality of vehicles may be different or identical to one another. That is to say, the plurality of vehicles may be identical in make and model or different in make and model. Additionally or alternatively, communication between the plurality of vehicles may be modified based on vehicle operator sex, a driver behavior, a vehicle maintenance history, a tire tread, a tire type, a vehicle transmission, and a vehicle cargo load. For example, if conditions are slippery and a vehicle without winter tires sends a message to a different vehicle with winter tires, then the vehicle or the different vehicle may adjust the message to match its own conditions.

A first vehicle 422 is illustrated adjacent to a first extreme end 412 of the travel path 402. The first vehicle 422 travels in the first direction. A second vehicle 424 is illustrated adjacent to a second extreme end 414 of the travel path 402. The second vehicle 424 travels in the second direction. A third vehicle 426 is illustrated adjacent to the second extreme end 414 and travels in the first direction. A fourth vehicle 428 is illustrated between the first vehicle 422 and the second vehicle 424 and travels in the second direction.

The first vehicle 422 has travelled through the location 404 and generated a first vehicle message based on an event at the location 404. The first vehicle 422 transmitted the first vehicle message to each of the second vehicle 424 and the fourth vehicle 428 as it passes them. In some examples, additionally or alternatively, the first vehicle 422 may delete the first vehicle message following transmitting the first vehicle message to the second vehicle 424.

When the second vehicle 424 passed through the location 404, the second vehicle operating parameters may be adjusted at the location 404 based on the first vehicle message. However, the operating parameters of the first vehicle message may not be applicable to driving conditions experienced by the second vehicle at the location 404. This may be due to the first vehicle 422 traveling on the first side of the travel path 402 and the second vehicle 424 traveling on the second side of the travel path 402. For example, the first side may comprise ice at the location 404, which may prompt the first vehicle 422 to generate the message. The second vehicle 424 may anticipate ice at the location 404. However, ice may not be present on the second side, resulting in the second vehicle 424 generating a second vehicle message different than the first vehicle message.

The third vehicle 426 may receive each of the first vehicle message and the second vehicle message from the second vehicle 424. Operating parameters of the third vehicle 426 may be adjusted based on one or more of the first vehicle message, the second vehicle message, and a combination of both messages. In one example, since the third vehicle 426 is traveling in the first direction, the first vehicle message may include more accurate operating parameter adjustment suggestions than the second vehicle message. As such, data from the first vehicle message may be primarily used to adjust operating parameters of the third vehicle 426. Despite this, the third vehicle 426 may still store the second vehicle message in order to transmit the second vehicle message to a next oncoming vehicle (e.g., the fourth vehicle 428).

Upon passing through the location 404, the third vehicle 426 may compare conditions at the location 404 relative to data provided by the first vehicle message and the second vehicle message. In one example, the third vehicle 426 may determine an accuracy of each of the messages by comparing a recent experience at the location 404. For example, conditions at the location 404 match the second vehicle message and not the first vehicle message, then the third vehicle 426 may delete the first vehicle message and store only the second vehicle message. As another example, if the conditions at the location 404 match the first vehicle message and not the second vehicle message, then the second vehicle 424 may continue to store both the first vehicle message and the second vehicle message. This may be due to the second vehicle message being based on the second side of the travel path, which may comprise different conditions than the first side of the travel path. Additionally or alternatively, the second vehicle 424 may delete the second vehicle message to conserve memory. As a further example, if the conditions at the location 404 do not match either the first vehicle message or the second vehicle message, then the second vehicle 424 may delete each of the first and second vehicle messages. In such an example, the third vehicle 426 may generate a third vehicle message including up-to-date data regarding the location 404.

Once the third vehicle 426 and the fourth vehicle 428 pass one another, the third vehicle 426 may transmit one or more messages to the fourth vehicle 428. The third vehicle 426 may transmit the second vehicle message and either an original message (e.g., the first vehicle message) or an updated message (e.g., the third vehicle message). Upon arriving at the location 404, operating parameters of the fourth vehicle 428 may be adjusted based on data in one or more of the messages transmitted to the fourth vehicle 428.

The fourth vehicle 428 may also compare the content of the messages received to conditions at the location 404. If the content matches the conditions at the location 404, then the messages may be stored by the fourth vehicle 428 and transmitted to a next vehicle. If the content does not match, then the fourth vehicle 428 may generate a fourth vehicle message, which may provide updated conditions to a next vehicle.

The technical effect of storing the data on memory of the vehicle in absence of the RSU is to transmit a vehicle event to a different vehicle. By doing this, the different vehicle may prophylactically adjust its operating parameters in anticipation of the vehicle event.

The disclosure also provides support for a system for a vehicle including a controller of the vehicle comprising instructions stored in memory thereof that when executed enable the controller to gather data related to a vehicle event at a location, and store the data in memory in response to the location being free of a road-side unit (RSU), where the controller is further configured to establish a vehicle-to-infrastructure network in wireless communication with the vehicle at a second location different from the location. A first example of the system further includes where the vehicle is a first vehicle, and wherein the instructions further enable the controller to transmit the data to a second vehicle within a threshold proximity of the first vehicle. A second example of the system, optionally including the first example, further includes where the threshold proximity is based on a range of vehicle-to-vehicle communication hardware of the first vehicle and the second vehicle. A third example of the system, optionally including one or more of the previous examples, further includes where the instructions further enable the controller to delete the data in response to a threshold period elapsing prior to the second vehicle being with the threshold proximity to the first vehicle. A fourth example of the system, optionally including one or more of the previous examples, further includes where the data further comprises suggested operating parameter adjustments based on the vehicle event. A fifth example of the system, optionally including one or more of the previous examples, further includes where the operating parameter adjustments comprise adjusting an engine speed, a vehicle speed, an engine fueling, and traction control. A sixth example of the system, optionally including one or more of the previous examples, further includes where the vehicle event includes one or more of a vehicle collision, slippery road conditions, a change in road surface, and a reduction in visibility.

The disclosure further provides support for a system for a vehicle communication network, the system including a plurality of road side units (RSUs) each located at a location of a plurality of locations, and a plurality of vehicles traveling along a travel path along which the plurality of locations is located, wherein each vehicle of the plurality of vehicles comprises a controller with instructions stored on memory thereof that when executed enable the controller to store a vehicle event in memory that occurred at a location of the plurality of locations in response to the location being free of an RSU. A first example of the system further includes where the instructions further enable the controller to remove the vehicle event from memory in response to a different vehicle not being within a threshold vicinity of a vehicle in which the vehicle event is stored within a threshold duration. A second example of the system, optionally including the first example, further includes where the threshold duration is a dynamic value adjusted based on a prioritization of the vehicle. A third example of the system, optionally including one or more of the previous examples, further includes where the instructions further enable the controller to transmit the vehicle event to a different vehicle within a threshold vicinity of a vehicle in which the vehicle event is stored within a threshold duration. A fourth example of the system, optionally including one or more of the previous examples, further includes where the vehicle event is transmitted to a vehicle by a prior vehicle, the prior vehicle traveling through the location first. A fifth example of the system, optionally including one or more of the previous examples, further includes where the instructions further enable the controller to adjust the vehicle in response to the vehicle event not matching conditions at the location upon traveling through the location. A sixth example of the system, optionally including one or more of the previous examples, further includes where the instructions further enable the controller to update the vehicle event stored in memory and transmit the updated vehicle event to a different vehicle traveling toward the location. A seventh example of the system, optionally including one or more of the previous examples, further includes where the instructions further enable the controller to delete the vehicle event.

The disclosure further provides support for a system for a vehicle communication network between a plurality of vehicles and an infrastructure, the system including a plurality of road side units (RSUs) each located at a location of a plurality of locations, and the plurality of vehicles traveling along a travel path along which the plurality of locations is located, wherein each vehicle of the plurality of vehicles comprises a controller with instructions stored on memory thereof that when executed enable the controller to store a vehicle event in memory that occurred at a location of the plurality of locations in response to the location being free of an RSU, and remove the vehicle event from memory in response to a different vehicle not being within a threshold vicinity of a vehicle in which the vehicle event is stored within a threshold duration. A first example of the system further includes where the different vehicle is traveling toward the location. A second example of the system, optionally including the first example, further includes where prior to storing the vehicle event, the vehicle receives the vehicle event from a prior vehicle, wherein the prior vehicle traveled through the location before the vehicle. A third example of the system, optionally including one or more of the previous examples, further includes where the instructions further enable the controller to adjust operating parameters of the vehicle based on the vehicle event received from the prior vehicle upon arriving to the location. A fourth example of the system, optionally including one or more of the previous examples, further includes where the instructions further enable the controller to compare the vehicle event received from the prior vehicle to current conditions at the location.

As used herein, an element or step recited in the singular and preceded with the word "a" or "an" should be understood as not excluding plural of said elements or steps, unless such exclusion is explicitly stated. Furthermore, references to "one embodiment" of the invention do not exclude the existence of additional embodiments that also incorporate the recited features. Moreover, unless explicitly stated to the contrary, embodiments "that includes," "including," or "having" an element or a plurality of elements having a particular property may include additional such elements not having that property. The terms "including" and "in which" are used as the plain-language equivalents of the respective terms "that includes" and "wherein." Moreover, the terms "first," "second," and "third," etc. are used merely as labels, and are not intended to impose numerical requirements or a particular positional order on their objects.

Although the invention has been explained in relation to its preferred embodiment(s) as mentioned above, it is to be understood that many other possible modifications and variations can be made without departing from the scope of the present invention, which is defined by the claims.

## Claims

1. A system for a vehicle communication network, the system comprising:
a plurality of road side units (130), RSUs, each located at a location of a plurality of locations; and
a plurality of vehicles (101, 140, 422-428) traveling along a travel path (402) along which the plurality of locations is located; wherein
each vehicle of the plurality of vehicles (101, 140, 422-428) comprises a controller with instructions stored on memory thereof that when executed enable the controller to:
gather data related to a vehicle event at a location of the plurality of locations; and
store in memory the data related to the vehicle event that occurred at the location of the plurality of locations in response to the location being free of an RSU, where the controller is further configured to establish a vehicle-to-infrastructure network in wireless communication with the vehicle at a second location different from the location,
wherein the plurality of vehicles comprises a first vehicle and a second vehicle, and
wherein, in the first vehicle, the instructions further enable the controller to transmit the data to a second vehicle responsive to the second vehicle being within a threshold proximity of the first vehicle within a threshold period, and delete the data responsive to the threshold period elapsing prior to the second vehicle being within the threshold proximity of the first vehicle.

2. The system of claim 1, wherein the instructions further enable the controller to remove the data related to the vehicle event from memory in response to a different vehicle (140) not being within a threshold vicinity of a vehicle (101) in which the vehicle event is stored within a threshold duration.

3. The system of claim 2, wherein the threshold duration is a dynamic value adjusted based on a prioritization of the vehicle (101).

4. The system of any of claims 1 to 3, wherein the instructions further enable the controller to transmit the data related to the vehicle event to a different vehicle (140) within a threshold vicinity of a vehicle (101) in which the data related to the vehicle event is stored within a threshold duration.

5. The system of any of claims 1 to 4, wherein the data related to the vehicle event is transmitted to a vehicle by a prior vehicle, the prior vehicle traveling through the location first.

6. The system of claim 5, wherein the instructions further enable the controller to adjust the vehicle in response to the vehicle event not matching conditions at the location upon traveling through the location.

7. The system of claim 6, wherein the instructions further enable the controller responsive to the vehicle event not matching conditions at the location upon traveling through the location, to update the vehicle event stored in memory and transmit the updated vehicle event and original vehicle event to a different vehicle (140) traveling toward the location.

8. The system of claim 6 or 7, wherein the instructions further enable the controller to delete the data related to the vehicle event.

9. The system of claim 1, wherein the threshold proximity is based on a range of vehicle-to-vehicle communication hardware of the first vehicle (422) and the second vehicle (424).

10. The system of claim 1, wherein the data further comprises suggested operating parameter adjustments based on the vehicle event.

11. The system of claim 10, wherein the operating parameter adjustments comprise adjusting an engine speed, a vehicle speed, an engine fueling, and traction control.

12. The system of any preceding claim, wherein the vehicle event includes one or more of a vehicle collision, slippery road conditions, a change in road surface, and a reduction in visibility.

## Patentansprüche

1. System für ein Fahrzeugkommunikationsnetzwerk, wobei das System Folgendes umfasst:
eine Vielzahl von straßenseitigen Einheiten (130) (road side units - RSUs), die jeweils an einer Stelle einer Vielzahl von Stellen angeordnet sind; und
eine Vielzahl von Fahrzeugen (101, 140, 422-428), die entlang eines Fahrwegs (402) fährt, entlang dessen die Vielzahl von Stellen gelegen ist; wobei
jedes Fahrzeug der Vielzahl von Fahrzeugen (101, 140, 422-428) ein Steuergerät mit in dessen Speicher gespeicherten Anweisungen umfasst, die bei Ausführung das Steuergerät dazu befähigen:
ein Fahrzeugereignis betreffende Daten an einer Stelle der Vielzahl von Stellen zu sammeln; und
die das Fahrzeugereignis, das an der Stelle der Vielzahl von Stellen aufgetreten ist, betreffenden Daten im Speicher als Reaktion darauf zu speichern, dass die Stelle frei von einer RSU ist, wobei das Steuergerät ferner dazu konfiguriert ist, ein Fahrzeug-zu-Infrastruktur-Netzwerk in drahtloser Kommunikation mit dem Fahrzeug an einer zweiten Stelle, die sich von der Stelle unterscheidet, aufzubauen, wobei die Vielzahl von Fahrzeugen ein erstes Fahrzeug und ein zweites Fahrzeug umfasst und wobei im ersten Fahrzeug die Anweisungen das Steuergerät ferner dazu befähigen, die Daten an ein zweites Fahrzeug als Reaktion darauf zu übertragen, dass sich das zweite Fahrzeug innerhalb einer Schwellennähe des ersten Fahrzeugs innerhalb eines Schwellenzeitraums befindet, und die Daten als Reaktion darauf zu löschen, dass der Schwellenzeitraum verstreicht, bevor sich das zweite Fahrzeug innerhalb der Schwellennähe des ersten Fahrzeugs befindet.

2. System nach Anspruch 1, wobei die Anweisungen das Steuergerät ferner dazu befähigen, die das Fahrzeugereignis betreffenden Daten als Reaktion darauf aus dem Speicher zu entfernen, dass sich ein anderes Fahrzeug (140) nicht innerhalb einer Schwellenumgebung eines Fahrzeugs (101), in dem das Fahrzeugereignis gespeichert ist, innerhalb einer Schwellendauer befindet.

3. System nach Anspruch 2, wobei die Schwellendauer ein dynamischer Wert ist, der basierend auf einer Priorisierung des Fahrzeugs (101) angepasst wird.

4. System nach einem der Ansprüche 1 bis 3, wobei die Anweisungen das Steuergerät ferner dazu befähigen, die das Fahrzeugereignis betreffenden Daten an ein anderes Fahrzeug (140) innerhalb einer Schwellenumgebung eines Fahrzeugs (101), in dem die das Fahrzeugereignis betreffenden Daten gespeichert sind, innerhalb einer Schwellendauer zu übertragen.

5. System nach einem der Ansprüche 1 bis 4, wobei die das Fahrzeugereignis betreffenden Daten durch ein vorausfahrendes Fahrzeug an ein Fahrzeug übertragen werden, wobei das vorausfahrende Fahrzeug zuerst durch die Stelle fährt.

6. System nach Anspruch 5, wobei die Anweisungen das Steuergerät ferner dazu befähigen, das Fahrzeug als Reaktion darauf anzupassen, dass das Fahrzeugereignis nicht mit Bedingungen an der Stelle beim Durchfahren der Stelle übereinstimmt.

7. System nach Anspruch 6, wobei die Anweisungen das Steuergerät ferner dazu befähigen, als Reaktion darauf, dass das Fahrzeugereignis nicht mit Bedingungen an der Stelle beim Durchfahren der Stelle übereinstimmt, das im Speicher gespeicherte Fahrzeugereignis zu aktualisieren und das aktualisierte Fahrzeugereignis und das ursprüngliche Fahrzeugereignis an ein anderes Fahrzeug (140) zu übertragen, das in Richtung der Stelle fährt.

8. System nach Anspruch 6 oder 7, wobei die Anweisungen das Steuergerät ferner dazu befähigen, die das Fahrzeugereignis betreffenden Daten zu löschen.

9. System nach Anspruch 1, wobei die Schwellennähe auf einer Reichweite von Fahrzeug-zu-Fahrzeug-Kommunikationshardware des ersten Fahrzeugs (422) und des zweiten Fahrzeugs (424) basiert.

10. System nach Anspruch 1, wobei die Daten ferner vorgeschlagene Betriebsparameteranpassungen basierend auf dem Fahrzeugereignis umfassen.

11. System nach Anspruch 10, wobei die Betriebsparameteranpassungen das Anpassen einer Motordrehzahl, einer Fahrzeuggeschwindigkeit, einer Kraftstoffzufuhr des Motors und einer Traktionskontrolle umfassen.

12. System nach einem der vorhergehenden Ansprüche, wobei das Fahrzeugereignis eines oder mehrere von einer Fahrzeugkollision, rutschigen Straßenbedingungen, einer Änderung der Straßenoberfläche und einer Sichtweitenverringerung beinhaltet.

## Revendications

1. Système pour un réseau de communication de véhicule, le système comprenant :
une pluralité d'unités de bord de route (130), UBR, chacune située à un emplacement d'une pluralité d'emplacements ; et
une pluralité de véhicules (101, 140, 422-428) circulant le long d'un itinéraire (402) le long duquel se trouve la pluralité d'emplacements ; dans lequel
chaque véhicule de la pluralité de véhicules (101, 140, 422-428) comprend un contrôleur avec des instructions stockées dans sa mémoire, qui, lorsqu'elles sont exécutées, permettent au contrôleur de :
recueillir des données relatives à un événement de véhicule à un emplacement de la pluralité d'emplacements ; et
stocker en mémoire les données relatives à l'événement de véhicule survenu à l'emplacement de la pluralité d'emplacements en réponse à l'absence d'UBR à l'emplacement, le contrôleur étant en outre configuré pour établir un réseau véhicule-infrastructure en communication sans fil avec le véhicule situé à un second emplacement différent de l'emplacement, dans lequel la pluralité de véhicules comprend un premier véhicule et un deuxième véhicule, et, dans lequel, dans le premier véhicule, les instructions permettent en outre au contrôleur de transmettre les données à un deuxième véhicule en réponse au deuxième véhicule se trouvant à une proximité seuil du premier véhicule pendant une période seuil, et de supprimer les données en réponse à l'écoulement de la période seuil avant que le deuxième véhicule ne se trouve à une distance seuil du premier véhicule.

2. Système selon la revendication 1, dans lequel les instructions permettent en outre au contrôleur de supprimer de la mémoire les données relatives à l'événement de véhicule en réponse à un véhicule différent (140) ne se trouvant pas dans un voisinage seuil d'un véhicule (101) dans lequel l'événement de véhicule est stocké pendant une durée de seuil.

3. Système selon la revendication 2, dans lequel la durée de seuil est une valeur dynamique ajustée sur la base d'une priorisation du véhicule (101).

4. Système selon l'une quelconque des revendications 1 à 3, dans lequel les instructions permettent en outre au contrôleur de transmettre les données relatives à l'événement de véhicule à un véhicule différent (140) situé dans un voisinage seuil d'un véhicule (101) dans lequel les données relatives à l'événement de véhicule sont stockées pendant une durée de seuil.

5. Système selon l'une quelconque des revendications 1 à 4, dans lequel les données relatives à l'événement de véhicule sont transmises à un véhicule par un véhicule précédent, le véhicule précédent passant à travers l'emplacement en premier.

6. Système selon la revendication 5, dans lequel les instructions permettent en outre au contrôleur d'ajuster le véhicule en réponse à l'événement de véhicule ne correspondant pas aux conditions de l'emplacement lors du passage à travers l'emplacement.

7. Système selon la revendication 6, dans lequel les instructions permettent en outre au contrôleur, en réponse à l'événement de véhicule ne correspondant pas aux conditions de l'emplacement lors du passage à travers celui-ci, de mettre à jour l'événement de véhicule stocké en mémoire et de transmettre l'événement de véhicule mis à jour et l'événement de véhicule d'origine à un véhicule différent (140) se dirigeant vers l'emplacement.

8. Système selon la revendication 6 ou 7, dans lequel les instructions permettent en outre au contrôleur de supprimer les données relatives à l'événement impliquant le véhicule.

9. Système selon la revendication 1, dans lequel la proximité seuil est basée sur une gamme de matériels de communication véhicule-à-véhicule du premier véhicule (422) et du deuxième véhicule (424).

10. Système selon la revendication 1, dans lequel les données comprennent en outre des réglages suggérés de paramètres de fonctionnement basés de l'événement de véhicule.

11. Système selon la revendication 10, dans lequel les réglages de paramètres de fonctionnement comprennent le réglage d'un régime moteur, d'une vitesse du véhicule, d'une alimentation en carburant du moteur et du contrôle de traction.

12. Système selon une quelconque des revendications précédentes, dans lequel l'événement de véhicule inclut un ou plusieurs des éléments suivants : collision de véhicules, des conditions routières glissantes, un changement de la surface de la route et une réduction de la visibilité.
